# EUROPEAN PATENT APPLICATION

(11) **EP 4 744 804 A1**
(43) Date of publication of application: **20.05.2026**
(21) Application number: 24212932.8
(22) Date of filing: 14.11.2024
(51) Int. Cl.: B22F 10/28, B22F 12/17, B22F 12/20, B22F 12/30, B33Y 10/00, B33Y 30/00, B33Y 40/00, B33Y 50/02, B29C 64/153, B29C 64/245

(54) **THERMOREGULATING PLATE FOR THERMOREGULATING A SUBSTRATE PLATE IN AN ADDITIVE MANUFACTURING DEVICE, MANUFACTURING DEVICE HAVING SUCH A THERMOREGULATING PLATE, AND METHOD FOR CONTROLLING A TEMPERATURE OF A SUBSTRATE PLATE IN A MANUFACTURING DEVICE BY USE OF SUCH A THERMOREGULATING PLATE**

(71) Applicant: TRUMPF Additive Manufacturing Italia S.r.l., 36015 Schio (VI) (IT)
(72) Inventor: Greselin, Stefano, 36050 Bolzano Vicentino (IT); Panozzo, Silvio, 36013 Piovene Rocchette (IT)
(74) Representative: Gleiss Große Schrell und Partner mbB

(57) **Abstract**

The invention relates to thermoregulating plate (3) for thermoregulating a substrate plate (5) in an additive manufacturing device (1), wherein the thermoregulating plate (3) comprises at least one thermoregulating structure (21) integrated in the thermoregulating plate (3), and wherein the thermoregulating plate (3) has a contact surface (7) and is adapted to lie, with the contact surface (7), close to a rear surface (9) opposite to a build surface (11) of the substrate plate (5).

## Description

The invention relates to a thermoregulating plate for thermoregulating a substrate plate in an additive manufacturing device, an additive manufacturing device having such a thermoregulating plate, and a method for controlling a temperature of a substrate plate in an additive manufacturing device by use of such a thermoregulating plate.

In an additive manufacturing process, it is desirable to be able to heat and/or cool a substrate plate having a build surface on which an additively manufactured object is built. It is generally most desirable to be able to thermoregulate the substrate plate, i.e. control the substrate plate's temperature, keeping it at a predetermined temperature value, which may be constant or vary during the manufacturing process. In principle, it is conceivable to provide thermoregulating means, e.g. wires or channels, inside the substrate plate; however, such a substrate plate will be expensive, and it will be complicated to repeatedly break and restore required connections every time the substrate plate is exchanged in order to harvest recently built objects and provide a new substrate plate to build new objects, while at the same time maintaining a clean environment for the build process. It has also been suggested to cool a piston which moves the substrate plate during the manufacturing process; however, first, the piston typically is not thermally coupled to the substrate plate in a manner sufficient to control the substrate plate's temperature, and, second, it is desirable to cool the piston beyond the predetermined temperature for the substrate plate.

It is therefore an objective of the invention to provide a thermoregulating plate for thermoregulating a substrate plate in an additive manufacturing device, an additive manufacturing device having such a thermoregulating plate, and a method for controlling a temperature of a substrate plate in an additive manufacturing device by use of such a thermoregulating plate.

This objective is achieved by providing the present technical teachings, in particular the teachings of the independent claims as well as the teachings of the dependent claims and the preferred embodiments disclosed in the description.

According to a first aspect, the objective is in particular achieved by providing a thermoregulating plate for thermoregulating a substrate plate in an additive manufacturing device, wherein the thermoregulating plate comprises at least one thermoregulating structure integrated in the plate, and wherein the thermoregulating plate has a contact surface and is adapted to lie, with the contact surface, close to a rear surface opposite to a build surface of the substrate plate. Advantageously, the thermoregulating plate allows for efficient thermoregulating, i.e. heating and/or cooling, in particular temperature control, of the substrate plate, while at the same time the substrate plate itself can be a simple and easy-to-replace part, wherein it is not necessary to break or restore any electric or fluidic connections between the substrate plate and the remaining parts of the manufacturing device when the substrate plate is replaced. Still further, a piston for moving the substrate plate can be cooled independently from the substrate plate, such that a different - and optimised - temperature for the piston can be chosen.

In the context of the present technical teachings, the at least one thermoregulating structure is understood to be at least one thermoregulating means.

Further, the build surface of the substrate plate is understood to be a surface on which at least one object is additively manufactured during an additive manufacturing process in which the substrate plate is used.

The rear surface is understood to be a surface which is parallel to the build surface and arranged at an opposite side of the substrate plate along an axial direction, i.e. a direction along which the substrate plate is moved during a manufacturing process, e.g., for lowering the substrate plate stepwise in a powder bed based process when subsequently providing a series of powder material layers on top of each other in a constant working plane.

In particular, the contact surface is adapted to be arranged parallel to the rear surface, and lie close - in tangent contact - against the rear surface.

In the present technical teachings, that the contact surface is adapted to lie close to the rear surface, is in particular understood to mean that the contact surface lies close at least to a portion of the rear surface.

In an embodiment, the contact surface is adapted to essentially cover the whole rear surface, i.e. to lie close to approximately the complete rear surface, or close to the complete rear surface. In this embodiment, in particular, the thermoregulating plate is a single plate.

In another embodiment, the thermoregulating plate is embodied as a structured thermoregulating plate, comprising a plurality of subplates, each subplate having a contact sub-surface being adapted to lie close to an assigned part of the rear surface.

In still another embodiment, the thermoregulating plate has a contact surface which is adapted to lie close only to a portion of the rear surface. In this embodiment, the respective manufacturing device may have more than one thermoregulating plate, wherein the plurality of thermoregulating plates together is adapted to cover at least approximately the whole rear surface.

In particular, the thermoregulating plate is adapted to move together with the substrate plate during a manufacturing process.

In an embodiment, the thermoregulating plate comprises at least one sealing element which is adapted to provide sealing contact to a piston for moving the thermoregulating plate together with the substrate plate. Additionally, or in the alternative, the thermoregulating plate may comprise at least one first attachment element adapted to attach the thermoregulating plate to the piston. Still additionally, or in the alternative, the thermoregulating plate may comprise at least one second attachment element adapted to attach the thermoregulating plate to the substrate plate.

In an embodiment, the thermoregulating plate is adapted to be arranged in the piston, in particular in a recess of the piston.

In an embodiment, the at least one thermoregulating structure is integrated in a body of the thermoregulating plate. Advantageously, any thermoregulating medium is confined inside the thermoregulating structure in the body of the thermoregulating plate, such that a building environment at the build surface is not at risk to be contaminated by the thermoregulating medium.

Additionally, or in the alternative, the at least one thermoregulating structure is integrated in a surface of the thermoregulating plate. Advantageously, the thermoregulating structure is arranged very close to the substrate plate, such that the substrate plate may most efficiently be thermoregulated.

In an embodiment, the at least one thermoregulating structure is selected from the group consisting of a heating structure and a cooling structure. Advantageously, the substrate plate may be heated and/or cooled by the thermoregulating plate, according to current requirements. In particular, it may be desirable to heat the substrate plate at the beginning or even prior to a manufacturing process, and/or it may be desirable to cool the substrate plate during or even after the manufacturing process, in particular when the substrate plate is heated by an energy beam, e.g., a laser beam, during the manufacturing process.

In an embodiment, the thermoregulating plate comprises both a heating structure and a cooling structure as the at least one thermoregulating structure. Advantageously, the substrate plate may be heated and cooled by the thermoregulating plate, according to current requirements. In particular, the temperature of the substrate plate may be controlled, preferably to a predetermined temperature value, which may be constant or vary during the manufacturing process.

In an embodiment, the thermoregulating structure comprises at least one thermoregulating channel.

In the context of the present technical teachings, the thermoregulating structure in particular is understood to mean a heating structure, a cooling structure, or a heating structure and a cooling structure.

Further, the at least one thermoregulating channel in particular is understood to mean at least one heating channel, at least one cooling channel, or at least one heating channel and at least one cooling channel.

In an embodiment, the at least one thermoregulating channel is a circumferentially closed channel, in particular embedded inside the body of the thermoregulating plate. Alternatively, or additionally, the at least one thermoregulating channel is open at a circumference thereof, in particular open at an edge or towards an edge of the thermoregulating channel. The thermoregulating channel in particular has an edge extending along a fluid path formed along the thermoregulating channel between a first end and a second end of the thermoregulating channel.

In an embodiment, the at least one thermoregulating channel is embodied inside the body of the thermoregulating plate. In particular in this case, the thermoregulating channel is embodied as a circumferentially closed channel. Advantageously, any thermoregulating medium is confined inside the thermoregulating channel in the body of the thermoregulating plate, such that a building environment at the build surface is not at risk to be contaminated by the thermoregulating medium.

Additionally, or in the alternative, the at least one thermoregulating channel is embodied as a groove at the contact surface. In this case, in particular, the thermoregulating channel is open at a circumference thereof, in particular open at an edge or towards an edge of the thermoregulating channel. Advantageously, the thermoregulating plate is most easy and inexpensive to manufacture, e.g., by milling, and the thermoregulating medium can be in very close contact to the substrate plate.

In an embodiment, the heating structure comprises at least one electric heating wire. In this way, the substrate plate may easily and fast be heated by resistive heating.

In an embodiment, the at least one thermoregulating channel has the first end and the second end, the second end being distanced from the first end by the fluid path formed along the thermoregulating channel, and the at least one thermoregulating channel further comprises an inlet at the first end and an outlet at the second end. By adequately arranging the inlet and the outlet in relation to the thermoregulating plate, and in relation to each other, and further defining the fluid path by determining a specific pathway the thermoregulating channel follows across at least a part of the thermoregulating plate, the thermoregulating properties of the thermoregulating plate can be adjusted, and in particular optimised for the specific application or scenario, in which it is used. In particular, the thermoregulating properties may be adjusted to the build process and/or the geometry of the substrate plate.

In a further embodiment, the inlet and the outlet are arranged adjacent to each other. Advantageously, in this case connections at the inlet and the outlet can be adjacent to each other such that the thermoregulating plate is simple, fast and easy to connect.

In the alternative, the inlet and the outlet are arranged in a distance from each other, in particular in a distributed manner over the thermoregulating plate. Preferably, they are arranged at different sides of the thermoregulating plate or in different sectors of the thermoregulating plate. In this way, a different temperature profile or temperature gradient can be provided, than when the inlet and the outlet are adjacent to each other.

In yet a further embodiment, the inlet and the outlet are essentially spaced - from each other - by a length dimension or diameter of the thermoregulating plate. Preferably, they are arranged at different sides at an outer rim of the thermoregulating plate.

In an embodiment, the thermoregulating structure comprises exactly one thermoregulating channel, which may include an embodiment, in which the thermoregulating structure comprises a heating structure and a cooling structure, and the heating structure comprises exactly one heating channel and/or the cooling structure comprises exactly one cooling channel. This is a most simple design of the thermoregulating plate.

Preferably, the - exactly one and only - thermoregulating channel covers the complete extension of the thermoregulating plate. In particular, the thermoregulating channel extends across the entire contact surface.

In the alternative, the thermoregulating structure comprises a plurality of thermoregulating channels. Advantageously, this leaves more degrees of freedom to optimise the thermoregulating structure.

Preferably, each thermoregulating channel of the plurality of thermoregulating channels covers a portion of the thermoregulating plate assigned to the respective thermoregulating channel. In particular, each thermoregulating channel extends across a portion of the contact surface assigned to the respective thermoregulating channel. In an embodiment, the plurality of thermoregulating channels comprises two thermoregulating channels, wherein preferably each of the thermoregulating channels covers one half of the contact surface; alternatively, the plurality of thermoregulating channels comprises three thermoregulating channels, wherein preferably each of the thermoregulating channels covers one third of the contact surface; alternatively, the plurality of thermoregulating channels comprises four thermoregulating channels, wherein preferably each of the thermoregulating channels covers a quarter of the contact surface. The plurality of thermoregulating channels may comprise more than four thermoregulating channels, wherein preferably each of the thermoregulating channels covers a same fraction of the contact surface.

However, in other embodiments, the different thermoregulating channels of the plurality of thermoregulating channels may also cover portions of different size of the contact surface, such that the contact surface is unevenly divided among the different thermoregulating channels.

The different inlets and outlets, respectively, of the different thermoregulating channels may be combined to a common inlet and/or a common outlet.

In an embodiment, the at least one thermoregulating channel follows at least in parts a contour of an outer rim of the thermoregulating plate. Advantageously, this helps to produce a homogeneous temperature profile across the contact surface.

In an embodiment, the thermoregulating plate is manufactured in an additive manufacturing process. In this way, in particular thermoregulating channels integrated in the body of the thermoregulating plate can be easily manufactured, with no restrictions as to the shape or path of the channels.

In a second aspect, the objective is in particular achieved by providing a manufacturing device for additively manufacturing objects, the manufacturing device having a substrate plate and at least one thermoregulating plate according to the invention or according to at least one of the embodiments as disclosed above, wherein the contact surface of the thermoregulating plate is arranged in contact with the substrate plate. With respect to the manufacturing device, in particular the same advantages are achieved as explained above in relation to the thermoregulating plate.

In particular, the thermoregulating plate is arranged in close - tangent - contact with the substrate plate. Preferably, the contact surface of the thermoregulating plate is arranged in close - tangent - contact with the rear surface, opposite to the build surface, of the substrate plate, as described above.

Further, preferably, the contact surface is arranged in parallel to the build surface, and thus also in parallel to the rear surface.

In an embodiment, the contact surface essentially covers the whole rear surface, i.e. lies close to approximately the complete rear surface, or close to the complete rear surface. In particular, in this embodiment the thermoregulating plate is a single plate.

In another embodiment, the thermoregulating plate is embodied as a structured thermoregulating plate, comprising a plurality of subplates, each subplate having a contact sub-surface being arranged close to an assigned part of the rear surface.

In still another embodiment, the thermoregulating plate has a contact surface which lies close only to a portion of the rear surface. In this embodiment, the manufacturing device may have more than one thermoregulating plate, wherein the plurality of thermoregulating plates together covers at least approximately the whole rear surface.

In particular, the thermoregulating plate is arranged to move together with the substrate plate during a manufacturing process.

In an embodiment, the manufacturing device comprises a piston for moving the thermoregulating plate together with the substrate plate.

In an embodiment, the thermoregulating plate comprises at least one sealing element being arranged in sealing contact to the piston. Additionally, or in the alternative, the thermoregulating plate is attached to the piston by at least one first attachment element. Still additionally, or in the alternative, the thermoregulating plate may comprise at least one second attachment element attaching the thermoregulating plate to the substrate plate.

In an embodiment, the thermoregulating plate is arranged in the piston, in particular in a recess of the piston.

In an embodiment, the manufacturing device comprises a piston thermoregulating structure separate and in addition to the thermoregulating plate, preferably such that a temperature for the piston can be chosen independently and different from the temperature for the substrate plate.

In an embodiment, the manufacturing device has at least one fluid port in fluidic connection with the at least one thermoregulating structure, wherein the at least one fluid port is adapted to be connected to an external fluid source. Advantageously, the manufacturing device need not itself have or provide a fluid source.

In a further embodiment, the at least one fluid port is adapted to be connected to a compressed air supply - or in other words pressurised air supply - of a laboratory or an industrial facility where the manufacturing device is arranged in. Advantageously, an existing source of compressed air can be used in an inexpensive and easy way.

In an embodiment, the manufacturing device has a control device which is adapted to control a temperature of the substrate plate by adjusting a current or flow through the at least one thermoregulating structure. Advantageously, the temperature of the substrate plate can be controlled, in particular kept at a predetermined temperature value.

The current or flow may be a medium flow, in particular of a heating medium and/or a cooling medium, preferably a cooling medium, most preferably compressed air. The medium flow may be adjusted by a respective flow adjusting device, e.g., a valve, connected to the control device. Additionally, or in the alternative, the current may be an electric current, preferably for resistive heating, in particular through an electric heating wire. The electric current may be adjusted by a respective current adjusting device, e.g., a potentiometer, connected to the control device.

The control device may be adapted to receive feedback corresponding to the actual temperature of the substrate plate.

In an embodiment, the manufacturing device comprises at least one temperature sensor adapted and arranged for measuring the temperature of the substrate plate. The control device is connected to the temperature sensor in order to read a sensor value, corresponding to the substrate plate's temperature, provided by the temperature sensor.

The manufacturing device may comprise a plurality of temperature sensors, preferably having at least partially separated or disjunct measurement ranges distributed across the substrate plate, in particular in order to obtain a spatially resolved temperature profile.

In an embodiment, the control device is adapted to control the temperature of the substrate plate with a temporal resolution of 1 s or more, or a rate of at most 2 Hz, preferably at most 1 Hz. This is both efficient and effective for controlling the temperature of the substrate plate.

In a third aspect, the objective is in particular achieved by providing a method for controlling a temperature of a substrate plate in a manufacturing device for additively manufacturing objects, wherein a thermoregulating plate according to the invention or according to at least one of the embodiments as disclosed above is used to control the temperature of the substrate plate. With respect to the method, in particular the same advantages are achieved as explained above in relation to the thermoregulating plate or the manufacturing device.

Preferably, the temperature of the substrate plate is kept at a predetermined temperature value which may be constant or vary during a manufacturing process.

In an embodiment, the temperature of the substrate plate is controlled by adjusting a current or flow through the at least one thermoregulating structure.

In an embodiment, a medium flow, in particular of a heating medium and/or a cooling medium, preferably a cooling medium, most preferably compressed air, is controlled as the current or flow. The medium flow may be adjusted by a respective flow adjusting device, e.g., a valve, which preferably is controlled by a control device of the manufacturing device. Additionally, or in the alternative, an electric current, preferably for resistive heating, in particular through an electric heating wire, is adjusted as the current. The electric current may be adjusted by a respective current adjusting device, e.g., a potentiometer, which preferably is controlled by the control device.

In an embodiment, feedback corresponding to the actual temperature of the substrate plate is received.

In an embodiment, the temperature of the substrate plate is measured by at least one temperature sensor. A sensor value, corresponding to the substrate plate's temperature, may be provided by the temperature sensor and read by the control device.

In an embodiment, the temperature of the substrate plate is controlled with a temporal resolution of 1 s or more, or a rate of at most 2 Hz, preferably at most 1 Hz.

In an embodiment, the predetermined temperature of the substrate plate may be at least 100°C, preferably more than 100°C.

In an embodiment, the substrate plate's temperature is controlled from a start time to an end time of the manufacturing process.

Preferably, the substrate plate is heated prior to the start time. In addition, or in the alternative, the substrate plate is cooled after the end time.

The invention is explained below in further detail with reference the drawing. In the drawing
- Figure 1: shows an embodiment of a manufacturing device comprising a first embodiment of a thermoregulating plate;
- Figure 2: shows a second embodiment of the thermoregulating plate;
- Figure 3: shows a third embodiment of the thermoregulating plate;
- Figure 4: shows a fourth embodiment of the thermoregulating plate, and
- Figure 5: shows a fifth embodiment of the thermoregulating plate.

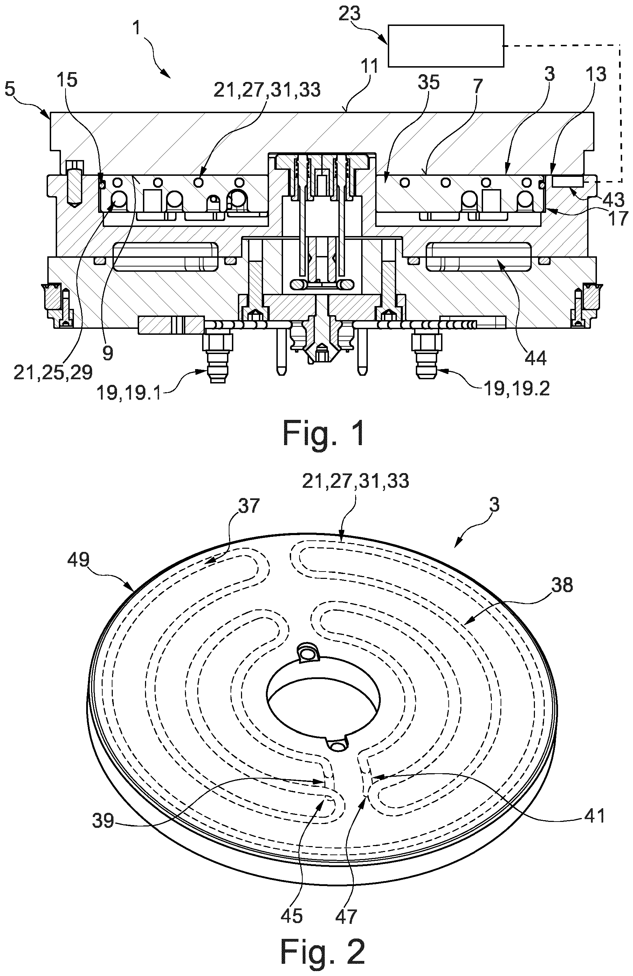

**Fig. 1** shows an embodiment of a manufacturing device 1 comprising a first embodiment of a thermoregulating plate 3.

The manufacturing device 1 is adapted to additively manufacture objects and has a substrate plate 5 and the thermoregulating plate 3. A contact surface 7 of the thermoregulating plate 3 is arranged in close, in particular tangent contact with the substrate plate 5, preferably with a rear surface 9 of the substrate plate 5. The rear surface 9 is located opposite to a build surface 11 of the substrate plate 5, on which at least one object is built during a manufacturing process. Further, the contact surface 7 is arranged parallel to the build surface 11, and also parallel to the rear surface 9.

Preferably, the contact surface 7 essentially covers the whole rear surface 9. Therefore, in this embodiment, the thermoregulating plate 3 is a single plate. In another embodiment, however, the thermoregulating plate 3 may be embodied as a structured thermoregulating plate, comprising a plurality of subplates, each subplate having a contact sub-surface being arranged close to an assigned part of the rear surface 9. In still another embodiment, the thermoregulating plate 3 may have a contact surface 7 which lies close only to a portion of the rear surface 9. In this embodiment, the manufacturing device 1 may have more than one thermoregulating plate 3, wherein the plurality of thermoregulating plates 3 together covers at least approximately the whole rear surface 9.

Preferably, the thermoregulating plate 3 is arranged to move together with the substrate plate 5 during the manufacturing process, driven by a piston 13.

The thermoregulating plate 3 may comprise at least one sealing element 15, the sealing element 15 being arranged in sealing contact to the piston 13. In the present embodiment shown here, the thermoregulating plate 3 is arranged in a recess 17 of the piston 13.

Preferably, the manufacturing device 1 has at least one fluid port 19 in fluidic connection with at least one thermoregulating structure 21 of the thermoregulating plate 3, and the at least one fluid port 19 is adapted to be connected to an external fluid source not shown here. In particular, the manufacturing device 1 comprises a first fluid port 19.1 as an inlet port, and a second fluid port 19.2 as an outlet port.

At least the first fluid port 19.1 is preferably adapted to be connected to a compressed air supply - not shown here - of a laboratory or an industrial facility where the manufacturing device 1 is arranged in. The second first fluid port 19.2 may be connected to an outlet pipe, ending anywhere inside or leading outside the laboratory or an industrial facility, e.g. via a ventilation duct.

Preferably, the manufacturing device 1 has a control device 23 which is adapted to control a temperature of the substrate plate 5 by adjusting a current or flow through the at least one thermoregulating structure 21. Thus, the temperature of the substrate plate can be controlled, in particular kept at a predetermined temperature value.

The at least one thermoregulating structure 21 is a heating structure 25 and/or a cooling structure 27. Preferably, as shown here, the thermoregulating plate 3 comprises both a heating structure 25 and a cooling structure 27.

In an embodiment, the heating structure 25 comprises an electric heating wire 29. The cooling structure 27 comprises a cooling channel 31 as a thermoregulating channel 33 of the thermoregulating structure 21.

The cooling channel 31 preferably is a circumferentially closed channel, embedded inside a body 35 of the thermoregulating plate 3. Alternatively, or additionally, the at least one thermoregulating channel 33 may be open at a circumference thereof, in particular open at an edge 37 - see figure 2 - or towards the edge 37 of the thermoregulating channel 33, in particular the at least one thermoregulating channel 33 may be embodied as a groove at the contact surface 7. The thermoregulating channel 33 in particular has the edge 37 extending along a fluid path 38 formed along the thermoregulating channel 33 between a first end 39 and a second end 41 of the thermoregulating channel 33, as shown in figure 2.

The cooling channel 31 may guide a flow of a cooling medium, preferably a flow of compressed air. The flow may be adjusted by a respective flow adjusting device, e.g., a valve, connected to the control device 23. An electric current through the electric heating wire 29 may be adjusted by a respective current adjusting device, e.g., a potentiometer, connected to the control device 23.

The control device 23 may be adapted to receive feedback corresponding to the actual temperature of the substrate plate 5. The manufacturing device 1 may comprise at least one temperature sensor 43 adapted and arranged for measuring the temperature of the substrate plate 5. The control device 23 then is connected to the temperature sensor 43 in order to read a sensor value, corresponding to the substrate plate's 5 temperature, provided by the temperature sensor 43. The manufacturing device 1 may comprise a plurality of temperature sensors 43 distributed across the substrate plate 5 in order to obtain a spatially resolved temperature profile.

The control device 23 may be adapted to control the temperature of the substrate plate 5 with a temporal resolution of 1 s or more, or a rate of at most 2 Hz, preferably at most 1 Hz.

The thermoregulating plate 3 may be manufactured in an additive manufacturing process.

Preferably, the manufacturing device 1 comprises a piston thermoregulating structure 44 - separate and in addition to the thermoregulating plate 3 -, preferably such that a temperature for the piston 13 can be chosen independently and different from the temperature for the substrate plate 5.

**Fig. 2** shows a second embodiment of the thermoregulating plate 3.

Identical and functionally identical elements are provided with the same reference numerals in all figures, so that reference is made to the previous description in each case.

The at least one thermoregulating channel 33 has inlet 45 at the first end 39 and an outlet 47 at the second end 41. In the embodiments shown here, the inlet 45 and the outlet 47 are arranged adjacent to each other. In the alternative, the inlet 45 and the outlet 47 may be arranged in a distributed manner over the thermoregulating plate 3, e.g., arranged at different sides of the thermoregulating plate 3 or in different sectors of the thermoregulating plate 3. In yet a further embodiment, the inlet 45 and the outlet 47 may essentially be spaced apart from each other by a length dimension or diameter of the thermoregulating plate 3.

In the second embodiment, the thermoregulating structure 21 comprises exactly one thermoregulating channel 33. Preferably, the - exactly one and only - thermoregulating channel 33 covers the complete extension of the thermoregulating plate3.

Preferably, the thermoregulating channel 33 follows at least in parts a contour of an outer rim 49 of the thermoregulating plate 3, the contour being a circle here.

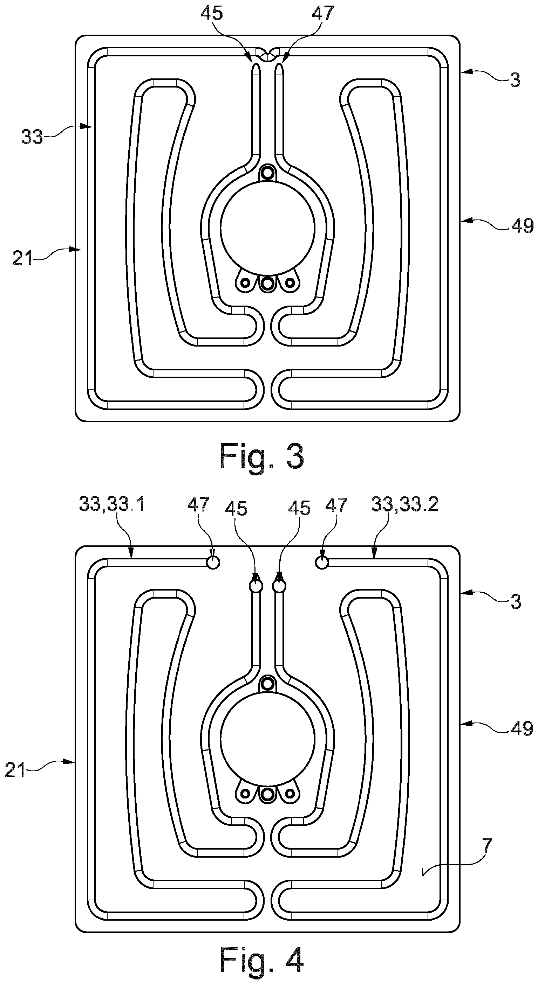

**Fig. 3** shows a third embodiment of the thermoregulating plate 3.

Also in this third embodiment, the inlet 45 and the outlet 47 are arranged adjacent to each other, and the thermoregulating structure 21 comprises exactly one thermoregulating channel 33 which covers the complete extension of the thermoregulating plate 3. The thermoregulating channel 33 follows at least in parts the contour of the outer rim 49 of the thermoregulating plate 3, which is a square or rectangle here.

**Fig. 4** shows a fourth embodiment of the thermoregulating plate 3.

In the fourth embodiment, the thermoregulating structure 21 comprises a plurality of thermoregulating channels 33, namely a first thermoregulating channel 33.1 and a second thermoregulating channel 33.2.

The first thermoregulating channel 33.1 and the second thermoregulating channel 33.2 each cover a portion of the thermoregulating plate 3 assigned to the respective thermoregulating channel 33.1, 33.2. In particular, each thermoregulating channel 33.1, 33.2 extends across a portion of the contact surface 7 assigned to the respective thermoregulating channel 33.1, 33.2, namely one half of the contact surface 7.

In figure 4, the thermoregulating plate 3 is a single plate. Alternatively, the thermoregulating plate 3 may be a structured thermoregulating plate having two subplates, each subplate comprising one of the two thermoregulating channels 33.1, 33.2.

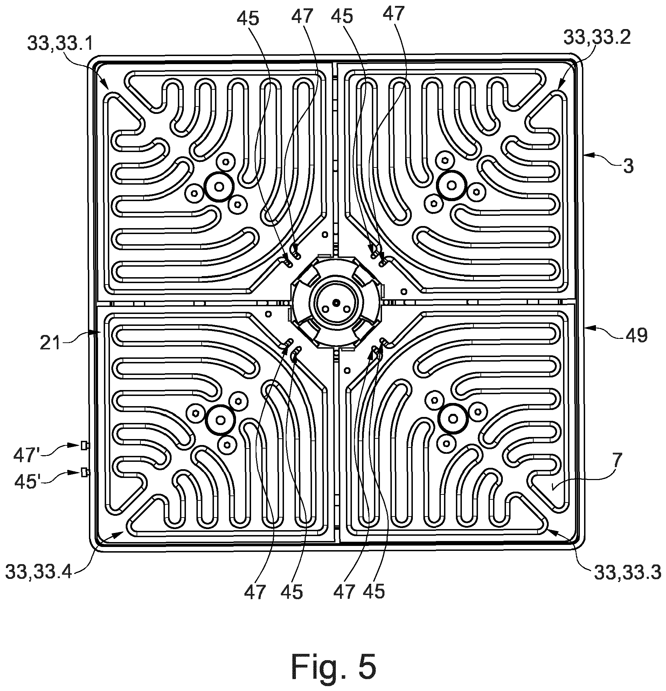

**Fig. 5** shows a fifth embodiment of the thermoregulating plate 3.

In the fifth embodiment, the thermoregulating structure 21 comprises four thermoregulating channels 33, namely a first thermoregulating channel 33.1, a second thermoregulating channel 33.2, a third thermoregulating channel 33.3, and a fourth thermoregulating channel 33.4.

The four thermoregulating channels 33.1, 33.2, 33.3, 33.4 each cover a portion of the thermoregulating plate 3 assigned to the respective thermoregulating channel 33.1, 33.2, 33.3, 33.4. In particular, each thermoregulating channel 33.1, 33.2, 33.3, 33.4 extends across a portion of the contact surface 7 assigned to the respective thermoregulating channel 33.1, 33.2, 33.3, 33.4, namely a quarter of the contact surface 7.

The different inlets 45 of the different thermoregulating channels 33.1, 33.2, 33.3, 33.4 are combined to a common inlet 45'. The different outlets 47 of the different thermoregulating channels 33.1, 33.2, 33.3, 33.4 are combined to a common outlet 47'.

The thermoregulating plate 3 may be a single plate. Alternatively, the thermoregulating plate 3 may be a structured thermoregulating plate having four subplates, each subplate comprising one of the four thermoregulating channels 33.1, 33.2, 33.3, 33.4.

In a method for controlling the temperature of the substrate plate 5 using the thermoregulating plate 3, the temperature of the substrate plate 5 preferably is kept at a predetermined temperature value which may be constant or vary during the manufacturing process.

In an embodiment, the temperature of the substrate plate 5 is controlled by adjusting the electric current through the electric heating wire 29 and the flow through the at least one cooling channel 31.

The predetermined temperature of the substrate plate 5 may be at least 100°C, preferably more than 100°C.

The substrate plate's 5 temperature may be controlled from a start time to an end time of the manufacturing process. Preferably, the substrate plate 5 is heated prior to the start time. In addition, or in the alternative, the substrate plate 5 is cooled after the end time.

## Claims

1. Thermoregulating plate (3) for thermoregulating a substrate plate (5) in an additive manufacturing device (1), wherein the thermoregulating plate (3) comprises at least one thermoregulating structure (21) integrated in the thermoregulating plate (3), and wherein the thermoregulating plate (3) has a contact surface (7) and is adapted to lie, with the contact surface (7), close to a rear surface (9) opposite to a build surface (11) of the substrate plate (5).

2. Thermoregulating plate (3) according to claim 1, wherein the at least one thermoregulating structure (21) is integrated in a body (35) or in a surface, preferably the contact surface (7), of the thermoregulating plate (3).

3. Thermoregulating plate (3) according to at least one of the preceding claims, wherein the at least one thermoregulating structure (21) is selected from the group consisting of a heating structure (25) and a cooling structure (27).

4. Thermoregulating plate (3) according to at least one of the preceding claims, wherein the thermoregulating plate (3) comprises both a heating structure (25) and a cooling structure (27) as the at least one thermoregulating structure (21).

5. Thermoregulating plate (3) according to at least one of the preceding claims, wherein the thermoregulating structure (21) comprises at least one thermoregulating channel (33).

6. Thermoregulating plate (3) according to claim 5, wherein the at least one thermoregulating channel (33) is embodied inside the body (35) of the thermoregulating plate (3), or as a groove at the contact surface (7).

7. Thermoregulating plate (3) according to at least one of claims 3 to 6, wherein the heating structure (25) comprises at least one electric heating wire (29).

8. Thermoregulating plate (3) according to at least one of claims 5 to 7, wherein the at least one thermoregulating channel (33) has a first end (39) and a second end (41), the second end (41) being distanced from the first end (39) by a fluid path (38) formed along the thermoregulating channel (33), and the at least one thermoregulating channel (33) further comprises an inlet at the first end (39) and an outlet at the second end (41), wherein the inlet (45) and the outlet (47) are arranged
- adjacent to each other, or
- in a distributed manner over the thermoregulating plate (3), in particular essentially spaced by a length dimension or diameter of the thermoregulating plate (3).

9. Thermoregulating plate (3) according to at least one of claims 5 to 8, wherein the thermoregulating structure (21) comprises
- exactly one thermoregulating channel (33), the thermoregulating channel (33) in particular covering the complete extension of the thermoregulating plate (3), or
- a plurality of thermoregulating channels (33), each thermoregulating channel (33) of the plurality of thermoregulating channels (33) covering a portion of the thermoregulating plate (3) assigned to the respective thermoregulating channel (33).

10. Thermoregulating plate (3) according to at least one of claims 5 to 9, wherein the at least one thermoregulating channel (33) follows at least in parts a contour of an outer rim (49) of the thermoregulating plate (3).

11. Thermoregulating plate (3) according to at least one of the preceding claims, wherein the thermoregulating plate (3) is manufactured in an additive manufacturing process.

12. Manufacturing device (1) for additively manufacturing objects, the manufacturing device (1) having a substrate plate (5) and at least one thermoregulating plate (3) according to at least one of claims 1 to 11, wherein the contact surface (7) of the thermoregulating plate (3) is arranged in contact with the substrate plate (5).

13. Manufacturing device (1) according to claim 12, wherein the manufacturing device (1) has at least one fluid port (19) in fluidic connection with the at least one thermoregulating structure (21), and wherein the at least one fluid port (19) is adapted to be connected to an external fluid source, in particular a compressed air supply of a laboratory or an industrial facility where the manufacturing device (1) is arranged in.

14. Manufacturing device (1) according to any of claims 12 and 13, wherein the manufacturing device (1) has a control device (23) adapted to control a temperature of the substrate plate (5) by adjusting a current or flow through the at least one thermoregulating structure (21), preferably with a temporal resolution of 1 s or more, or a rate of at most 1 Hz.

15. Method for controlling a temperature of a substrate plate (5) in a manufacturing device (1), in particular in a manufacturing device (1) according to any of claims 12 to 14, for additively manufacturing objects, wherein a thermoregulating plate (3) according to at least one of claims 1 to 11 is used to control the temperature of the substrate plate (5).
